# EUROPÄISCHE PATENTANMELDUNG

(11) **EP 0 755 625 A1**
(43) Veröffentlichungstag der Anmeldung: **29.01.1997**
(21) Anmeldenummer: 96112022.7
(22) Anmeldetag: 25.07.1996
(51) Int. Cl.: A01N 1/02

(54) **Konservieren von Geweben und Organen mit Sauerstoff unter Überdruck**

(30) Priorität: 28.07.1995 DE 19527734
(71) Anmelder: Verhaag, Hubert, 47623 Kevelaer (DE); Schwörer, Wilfried, F-67390 Artolsheim (FR); Schlegel, Jürgen, D-7801 Umkirch (DE)
(72) Erfinder: Verhaag, Hubert, 47623 Kevelaer (DE); Schwörer, Wilfried, F-67390 Artolsheim (FR); Schlegel, Jürgen, D-7801 Umkirch (DE)
(74) Vertreter: Dipl.-Phys.Dr. Manitz Dipl.-Ing. Finsterwald Dipl.-Ing. Grämkow Dipl.-Chem.Dr. Heyn Dipl.-Phys. Rotermund Morgan B.Sc.(Phys.)

(57) **Zusammenfassung**

Beschrieben ist ein Verfahren zur Konservierung von Geweben und Organen, insbesondere von Transplantationsgeweben und -organen, bei dem das zu behandelnde Gewebe oder Organ in gut gekühltem Zustand, insbesondere bei einer Temperartur im Bereich von -3°C bis 3°C, in einem luftdicht verschließbaren Raum in einer Sauerstoffatmosphäre während einer vorgebbaren Zeit zwischengelagert wird, wobei in dem luftdicht verschließbaren Raum eine Sauerstoffatmosphäre mit einem über dem Atmosphärendruck liegenden Druck aufgebaut wird, und wobei der Druck in dem abgeschlossenen Raum während der gesamten weiteren Zwischenlagerzeit auf einem über dem Atmosphärendruck liegenden Druck gehalten wird.

## Beschreibung

Die Erfindung betrifft ein Verfahren zur Konservierung von Geweben und Organen, insbesondere von Transplantationsgeweben und -organen.

Bei Transplantationsgeweben und -organen besteht immer das Problem, daß die Transplantation innerhalb von sehr kurzer Zeit, im allgemeinen innerhalb von wenigen Stunden nach der Entnahme der Gewebe bzw. Organe aus einem Körper erfolgen muß. Es wird zwar versucht, durch Einhaltung bestimmter Temperaturen die Zeitspanne, in der die Gewebe bzw. Organe in einen neuen Körper eingepflanzt werden können, zu verlängern, jedoch ist dies nur in unzureichendem Maß möglich.

Aufgabe der vorliegenden Erfindung ist es, ein Verfahren anzugeben, durch das Gewebe und Organe, insbesondere Transplantationsgewebe und -organe, über eine lange Zeit konserviert werden können, ohne daß sich ihre Zellstruktur verändert.

Gelöst wird diese Aufgabe nach der Erfindung im wesentlichen durch ein Verfahren bei dem die Organe bzw. Gewebe in gut gekühltem Zustand, insbesondere bei einer Temperatur im Bereich von -3°C bis 3°C, in einem luftdicht verschließbaren Raum in einer Sauerstoffatmosphäre während einer vorgebbaren Zeit zwischengelagert werden, wobei in dem luftdicht verschließbaren Raum die Sauerstoffatmosphäre mit einem über dem Atmosphärendruck liegenden Druck aufgebaut wird und wobei der Druck in dem abgeschlossenen Raum während der gesamten weiteren Zwischenlagerzeit auf einem über dem Atmosphärendruck liegenden Druck gehalten wird.

Überraschenderweise hat es sich herausgestellt, daß Gewebe und Organe, die durch dieses Verfahren behandelt werden, selbst mehrere Tage nach der Entnahme aus einem Körper keine Veränderungen ihrer Zellstruktur aufweisen und damit noch für eine Transplantation geeignet sind.

Der Aufbau der Sauerstoffatmosphäre kann bei dem erfindungsgemäßen Verfahren erfolgen, nachdem in einem vorangehenden Schritt das der Umgebungsatmosphäre entsprechende Gas aus dem verschließbaren Raum entfernt wurde. Es ist aber auch möglich, Sauerstoff direkt mit Überdruck in den Raum einzublasen und dabei das der Umgebungsatmosphäre entsprechende Gas aus dem Raum herauszudrücken. Wesentlich ist, daß auf irgendeine Art eine Sauerstoffatmosphäre mit einem gegenüber der Umgebung erhöhten Druck in dem verschließbaren Raum geschaffen wird.

Dabei soll die in dem Raum geschaffene Sauerstoffatmosphäre vorteilhafterweise einen Reinheitsgrad von wenigstens 50 %, insbesondere mehr als 80 % und vorzugsweise von mindestens 93 % besitzen, wodurch erreicht wird, daß sich ein äußerst ausgeprägter Konservierungseffekt für die behandelten Gewebe ergibt.

Das erfindungsgemäße Verfahren kann besonders effektiv durchgeführt werden, wenn der Absaugvorgang während einer Zeitspanne von einer Stunde durchgeführt wird, wobei der Druck innerhalb des geschlossenen Raums bis zu einem Unterdruck von 50 bis 100 mbar abgesenkt wird, und anschließend der Aufbau der Sauerstoffatmosphäre innerhalb des geschlossenen Raums bis zu einem Druck von 6 bis 11 bar erfolgt.

Während der Zwischenlagerzeit kann eine kontinuierliche oder diskontinuierliche Ergänzung der Sauerstoffatmosphäre in dem geschlossenen Raum vorgenommen werden, wobei vorzugsweise in den geschlossenen Raum kontinuierlich Sauerstoff mit einem Druck eingeleitet wird, der höher als ein vorgebbarer Ablaßdruck ist, so daß sich aufgrund der Druckdifferenz eine kontinuierliche Durchströmung einstellt. Durch diese vorzugsweise kontinuierliche Ergänzung von Sauerstoff in dem abgeschlossenen Raum kann der ursprüngliche Sauerstoffgehalt in dem Raum während der gesamten Zwischenlagerzeit aufrechterhalten werden, so daß sich ein besonders guter Konservierungseffekt einstellt.

Weitere vorteilhafte Ausgestaltungen der Erfindung sind aus den Unteransprüchen ersichtlich.

Die Erfindung wird nachfolgend anhand der Zeichnung beispielsweise näher erläutert; in dieser zeigt:
- Fig. 1: eine schematische Seitenansicht einer Vorrichtung zur Durchführung des erfindungsgemäßen Verfahrens und
- Fig. 2: eine schematische Darstellung zur Verdeutlichung der Funktionsweise der Vorrichtung zur Durchführung des erfindungsgemäßen Verfahrens.

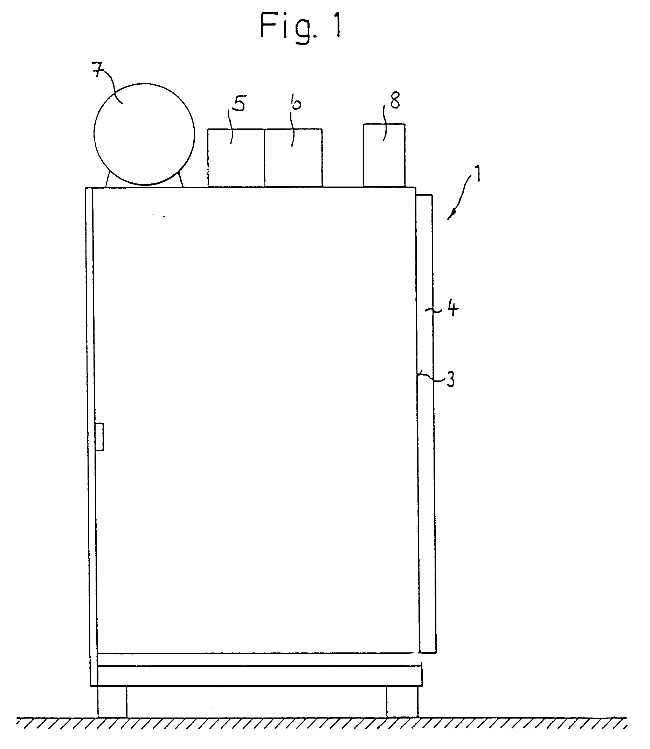

Fig. 1 zeigt eine erfindungsgemäße Vorrichtung mit einem aus einer Schweißkonstruktion bestehenden, geschlossen ausgebildeten Gehäuse 1 mit einer Öffnung 3, um ein zu behandelndes Gewebe oder Organ im wesentlichen allseitig sauerstoffzugänglich in das Gehäuse 1 zu legen. Die Öffnung 3 ist mittels einer Gehäusetür 4 dicht verschließbar.

An dem Gehäuse 1 sind außenseitig ein Sauerstofferzeuger 5, eine Evakuierungspumpe 6 sowie ein Sauerstofftank 7 und eine elektronische Steuereinheit 8 angebracht.

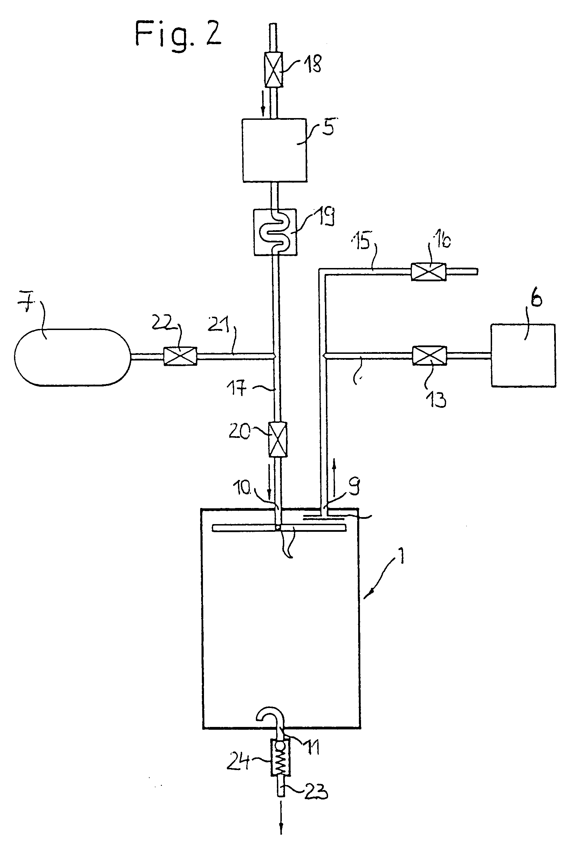

Das Gehäuse 1 weist ferner, wie Fig. 2 in schematischer Weise zeigt, deckenseitig eine Evakuierungsöffnung 9 und eine Sauerstoff-Einlaßöffnung 10 sowie bodenseitig eine Sauerstoff-Abführöffnung 11 auf.

Die Evakuierungspumpe 6 ist über eine mittels eines Magnetventils 13 verschließbare Rohrleitung oder einen Schlauch 14 mit der Evakuierungsöffnung 9 verbunden.

Von der Rohrleitung 14 zweigt zwischen dem Magnetventil 13 und der Evakuierungsöffnung 9 eine Rohrleitung oder ein Schlauch 15 ab, der ebenfalls mittels eines Magnetventils 16 verschließbar ist und in die Umgebungsatmosphäre mündet.

Der Sauerstofferzeuger 5 ist über eine Rohrleitung oder einen Schlauch 17 mit der Einlaßöffnung 10 verbunden, wobei das Ansaugende der Rohrleitung 14 mittels eines Magnetventils 18 verschließbar ist.

Zwischen dem Sauerstofferzeuger 5 und der Einlaßöffnung 10 ist weiterhin ein Wärmetauscher 19 in Form eines Peltier-Elementes vorgesehen. Hier wird die Temperatur des Sauerstoffs gemessen und der Sauerstoff auf circa 0°C abgekühlt. Die Kühlung des Sauerstoffs trägt bedeutend zum Konservierungseffekt der Organe und Gewebe bei.

Zwischen dem Sauerstofferzeuger 5 bzw. dem Wärmetauscher 19 und der Einlaßöffnung 10 ist weiterhin ein Magnetventil 20 vorgesehen.

Von der Rohrleitung 17 zweigt zwischen dem Magnetventil 20 und dem Wärmetauscher 19 eine weitere Rohrleitung oder ein Schlauch 21 ab, welcher durch ein Magnetventil 22 verschließbar ist und zum Sauerstofftank 7 führt. Die Rohrleitung 19 endet innerhalb des Gehäuses 1 in einer Sauerstoffverteilungsvorrichtung.

Die Abführung des Sauerstoffs aus dem Innenraum des Gehäuses 1 erfolgt ab einem bestimmten, vorgebbaren Druck über eine Rohrleitung oder einen Schlauch 23, der unterhalb dieses vorgebbaren Drucks von einem Überdruckventil 23 verschlossen wird. Das innerhalb des Gehäuses 1 angeordnete Ende der Rohrleitung 25 ist bogenförmig zum Boden des Gehäuses 1 hin zurückgeführt, um das Eindringen von Wasser oder Schmutz zu verhindern.

Diese Vorrichtung arbeitet bei der Durchführung des erfindungsgemäßen Verfahrens folgendermaßen:

Nach dem Einlegen eines zu behandelnden Gewebes oder Organs in das Gehäuse 1 wird die Gehäusetür 4 geschlossen und verriegelt. Die Steuereinheit 8 veranlaßt nun die Befüllung einer nicht dargestellten, pneumatischen Dichtung in der Form eines um die Öffnung 3 in einen geschlossenen Umlauf herumgeführten Schlauches mit Luft hohen Druckes, wodurch der Durchmesser des Schlauches erweitert wird, um die Türe 4 gegenüber dem Gehäuse 1 gas- und druckdicht abzudichten.

In diesem Anfangszustand sind die Magnetventile 13, 16, 18, 20 und 21 geschlossen.

Anschließend wird der Innenraum des Gehäuses etwa eine Stunde lang evakuiert, wobei das Magnetventil 13 über die Steuereinheit 8 geöffnet wird. Am Ende der einstündigen Evakuierungszeit ist innerhalb des Gehäuses 1 nahezu Vakuum erreicht, d. h. es herrscht ein Unterdruck von 50 bis 100 mbar.

Schon etwa zwei Stunden vor dem Beginn der Evakuierung des Gehäuses 1 beginnt die Sauerstofferzeugung über den Sauerstofferzeuger 9, wobei die Magnetventile 18 und 22 geöffnet werden, das Magnetventil 20 jedoch noch geschlossen bleibt.

Der Sauerstoff strömt somit nach einer entsprechenden Reinigung über den Wärmetauscher 19 und die Rohrleitung 21 in den Sauerstofftank 7, in dem am Ende der einstündigen Evakuierungsdauer ein Überdruck von etwa 6 bar herrscht.

Nach etwa einer Stunde wird die Evakuierung des Gehäuseinnenraums beendet und das Magnetventil 13 geschlossen. Das Magnetventil 20 wird nun geöffnet, so daß der unter Überdruck stehende Sauerstoff aus dem Sauerstofftank 7 in den Innenraum des Gehäuses 1 strömen kann. Nach etwa fünf Minuten findet zwischen dem Sauerstofftank 7 und dem Innenraum des Gehäuses 1 ein Druckausgleich statt, der etwa bei 0 bis 0,6 bar Überdruck liegt.

Nachdem die Sauerstoffatmosphäre innerhalb des Gehäuses 1 relativ schnell aufgebaut worden ist, schließt das Magnetventil 22 beim Druckausgleich, so daß der Sauerstoff vom Sauerstofferzeuger 5 auf direktem Weg in den Gehäuseinnenraum geleitet wird.

Nach einer mehrstündigen Aufbauphase ist im Gehäuseinnenraum ein Sauerstoffdruck von etwa 10 bis 11 bar erreicht, bei dem das Überdruckventil 24 öffnet. Ab diesem Zeitpunkt strömt der Sauerstoff kontinuierlich vom Bereich der Einlaßöffnung 10 zur Abführöffnung 11, so daß der Gehäuseinnenraum ständig mit frischem Sauerstoff beflutet wird. Dieser Zustand wird bis zum Ende der Zwischenlagerzeit beibehalten, die von mehreren Stunden bis zu mehreren Tagen dauern kann.

Nach der Beendigung der gewünschten Zwischenlagerzeit wird der Sauerstofferzeuger 5 ausgeschaltet und die beiden Magnetventile 18 und 20 werden geschlossen. Das Magnetventil 16 wird einige Minuten lang geöffnet, um einen Druckausgleich zwischen dem Gehäuseinnenraum und der Umgebungsatmosphäre zu erhalten.

Vor dem Öffnen der Gehäusetür 4 wird zwangsläufig die Luft aus der pneumatischen Türdichtung über ein entsprechend angesteuertes Magnetventil abgelassen, um zu vermeiden, daß beim Öffnen der Tür durch den fehlenden Gegendruck die Türdichtung beschädigt wird.

## Patentansprüche

1. Verfahren zur Konservierung von Geweben und Organen, insbesondere von Transplantationsgeweben und -organen, bei dem die Gewebe und Organe in gut gekühltem Zustand, insbesondere bei einer Temperatur im Bereich von -3°C bis 3°C, in einem luftdicht verschließbaren Raum in einer Sauerstoffatmosphäre während einer vorgebbaren Zeit zwischengelagert werden, wobei in dem luftdicht verschließbaren Raum die Sauerstoffatmosphäre mit einem über dem Atmosphärendruck liegenden Druck aufgebaut wird und wobei der Druck in dem abgeschlossenen Raum während der gesamten weiteren Zwischenlagerzeit auf einem über dem Atmosphärendruck liegenden Druck gehalten wird.

2. Verfahren nach Anspruch 1,
dadurch **gekennzeichnet,**
daß die Sauerstoffatmosphäre nach Abführung des der Umgebungsatmosphäre entsprechenden Gases aus dem verschließbaren Raum aufgebaut wird.

3. Verfahren nach Anspruch 1,
dadurch **gekennzeichnet,**
daß die Sauerstoffatmosphäre durch Einblasen von unter erhöhtem Druck stehenden Sauerstoff in den abgeschlossenen Raum geschaffen wird.

4. Verfahren nach einem der Ansprüche 1 bis 3,
dadurch **gekennzeichnet,**
daß die Sauerstoffatmosphäre einen Reinheitsgrad von wenigstens 50%, insbesondere mehr als 80% und vorzugsweise von mindestens 93% besitzt.

5. Verfahren nach einem der Ansprüche 1 bis 4,
dadurch **gekennzeichnet,**
daß der Absaugvorgang während einer Zeitspanne von wenigen Minuten bis zu sechs Stunden, insbesondere von eins bis drei und vorzugsweise von einer Stunde durchgeführt wird, wobei der Druck in dem abgeschlossenen Raum auf einen deutlich unter dem Atmosphärendruck liegenden Druck, insbesondere auf einen Unterdruck gegenüber dem Atmosphärendruck von etwa 50 bis 100 mbar abgesenkt wird.

6. Verfahren nach einem der Ansprüche 1 bis 5,
dadurch **gekennzeichnet,**
daß während des Absaugvorgangs in der ersten Phase des Absaugvorgangs mit einem steileren Druckabbaugradienten als in der letzten Phase des Absaugvorgangs gearbeitet wird.

7. Verfahren nach einem der Ansprüche 1 bis 6,
dadurch **gekennzeichnet,**
daß vor und/oder während des Absaugvorgangs Sauerstoff erzeugt und außerhalb des geschlossenen Raums mit Überdruck, vorzugsweise mit 6 bar Überdruck gegenüber dem Atmosphärendruck in einem Sauerstofftank gespeichert wird, und daß zumindest der anfängliche Aufbau der Sauerstoffatmosphäre in dem abgeschlossenen Raum nach Beendigung des Absaugvorgangs mittels des gespeicherten Sauerstoffs beschleunigt durchgeführt wird.

8. Verfahren nach einem der Ansprüche 1 bis 7,
dadurch **gekennzeichnet,**
daß nach dem Druckausgleich zwischen dem Sauerstofftank und dem abgeschlossenen Raum die Verbindung zwischen dem Sauerstofftank und dem abgeschlossenen Raum unterbrochen und der zum weiteren Aufbau des Überdrucks dem abgeschlossenen Raum erforderliche Sauerstoff direkt von der Sauerstoffquelle zugeführt wird.

9. Verfahren nach Anspruch 8,
dadurch **gekennzeichnet,**
daß der Druckausgleich bei etwa 0 bis 0,6 bar stattfindet.

10. Verfahren nach Anspruch 8 oder 9,
dadurch **gekennzeichnet,**
daß der Sauerstoff dem abgeschlossenen Raum von der Sauerstoffquelle mit einem Druck zugeführt wird, der etwas höher als der in dem abgeschlossenen Raum zu erreichende Druck ist.

11. Verfahren nach einem der Ansprüche 1 bis 10,
dadurch **gekennzeichnet,**
daß die Sauerstoffatmosphäre in dem abgeschlossenen Raum auf einen Überdruck gegenüber dem Atmosphärendruck von 1 bis 20 bar und vorzugsweise 6 bis 11 bar gebracht und während der Zwischenlagerzeit gehalten wird.

12. Verfahren nach einem der Ansprüche 1 bis 8,
dadurch **gekennzeichnet,**
daß während der Zwischenlagerzeit eine kontinuierliche oder diskontinuierliche Ergänzung der Sauerstoffatmosphäre in dem geschlossenen Raum vorgenommen wird, wobei vorzugsweise in den geschlossenen Raum kontinuierlich Sauerstoff mit einem Druck eingeleitet wird, der höher ist als ein vorgebbarer Ablaßdruck, so daß sich aufgrund der Druckdifferenz eine kontinuierliche Durchströmung einstellt.

13. Verfahren nach einem der Ansprüche 1 bis 12,
dadurch **gekennzeichnet,**
daß die Zwischenlagerzeit in einem Bereich von mehreren Stunden bis zu mehreren Tagen liegt.
